# EUROPEAN PATENT SPECIFICATION

(11) **EP 2 070 263 B1**
(45) Date of publication and mention of the grant of the patent: **27.05.2015**
(21) Application number: 07837878.3
(22) Date of filing: 07.09.2007
(51) Int. Cl.: H04W 72/04, H04W 72/08

(54) **METHOD FOR RESOURCE ALLOCATION IN A WIRELESS COMMUNICATION SYSTEM**
VERFAHREN ZUR RESSOURCENZUWEISUNG IN EINEM DRAHTLOSEN KOMMUNIKATIONSSYSTEM
PROCÉDÉ POUR L'ATTRIBUTION DE RESSOURCES DANS UN SYSTÈME DE COMMUNICATION SANS FIL

(30) Priority: 22.09.2006 US 534271
(43) Date of publication of application: 17.06.2009
(73) Proprietor: ALCATEL LUCENT, 92100 Boulogne-Billancourt (FR)
(72) Inventor: BALACHANDRAN, Krishna, Morganville, NJ 07751 (US); CALIN, Doru, Manalapan, NJ 07726 (US); JOSHI, Niranjan, Sudhir, Morris Plains, NJ 07950 (US); KANG, Joseph, H., Belle Mead, NJ 08502 (US); KOGIANTIS, Achilles, Madison, NJ 07940 (US)
(74) Representative: Wetzel, Emmanuelle
(86) International application number: PCT/US2007/019524
(87) International publication number: WO 2008/039294

(56) References cited:
- EP-A- 1 542 488
- EP-A- 1 672 842
- ROHDE&SCHWARZ: "WiMAX - General information about the standard 802.16" [Online] 13 June 2006 (2006-06-13), , XP007904309 Retrieved from the Internet: URL:http://www.rohde-schwarz.com/www/downc ent.nsf/ANFileByANNoForInternet/6FC512FCF8 4362D2C125718C00489768/$file/1MA96_0.pdf> [retrieved on 2008-03-17] pages 21 - 26, chapter 5 "802.16-2004 OFDMA" page 27, chapter 6 "802.16e"
- "Scalable OFDMA Physical Layer in IEEE 802.16 WirelessMAN" INTEL TECHNOLOGY JOURNAL, XX, US, vol. 8, no. 3, 20 August 2004 (2004-08-20), pages 201-212, XP002331249
- BALACHANDRAN K ET AL: "Zone Based Resource Allocation for OFDMA Systems" September 2006 (2006-09), IEEE VEH TECHNOL CONF; IEEE VEHICULAR TECHNOLOGY CONFERENCE; 2006 IEEE 64TH VEHICULAR TECHNOLOGY CONFERENCE, VTC-2006 FALL , XP031051488 chapter "III. SUB-ZONE SCHEDULING MECHANISM"

## Description

### BACKGROUND OF THE INVENTION

### 1. FIELD OF THE INVENTION

This invention relates generally to communication systems, and, more particularly, to wireless communication systems.

### 2. DESCRIPTION OF THE RELATED ART

Orthogonal Frequency Division Multiple Access (OFDMA) has been adopted as the multiple access technique for many wireless communication systems, including systems that operate according to the Institute of Electrical and Electronics Engineers (IEEE) 802.16e standard (also known as WiMAX), Universal Mobile Telecommunications System-Long Term Evolution (UMTS-LTE), which is currently being standardized by the Third Generation Partnership Project (3GPP), and High Rate Packet Data Revision C, which is currently being standardized by the Third Generation Partnership Project 2 (3GPP2). In an OFDMA system, the available bandwidth may be divided into a plurality of subcarrier frequencies (commonly referred to as subcarriers), which may be grouped into one or more subchannels. The process of allocating subcarriers to different subchannels is referred to as "subchannelization." Exemplary subchannelization methods include Distributed Subcarrier Permutations such as Partially Used Subchannelization (PUSC) and Fully Used Subchannelization (FUSC), and Adjacent Subcarrier Permutations such as Band Adaptive Modulation and Coding (AMC).

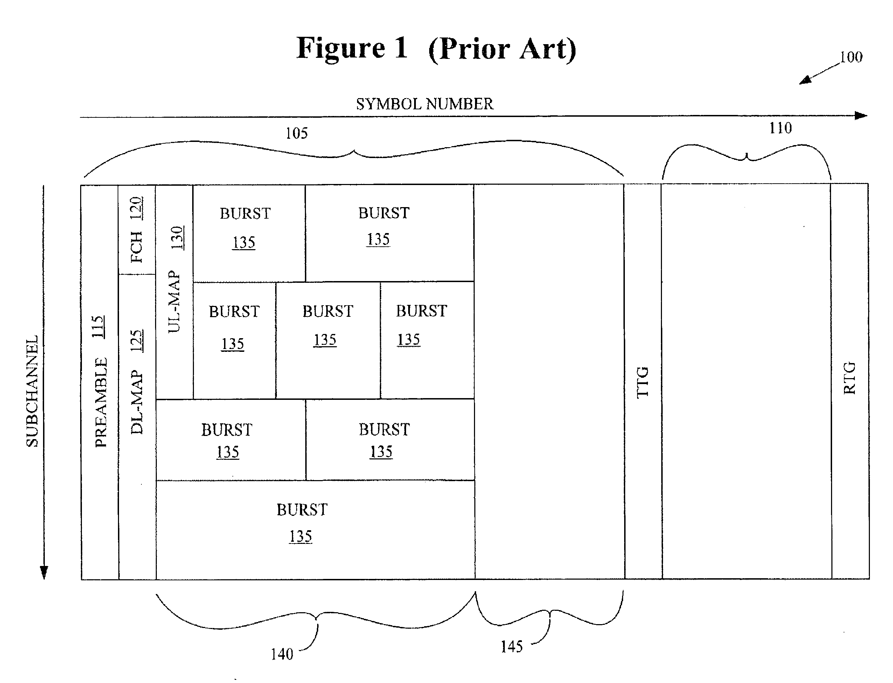

Figure 1 conceptually illustrates one exemplary embodiment of a frame structure implemented in the IEEE 802.16e standard. Each frame is partitioned into downlink and uplink subframes 105, 110, and each frame begins with transmission of mandatory control overhead. The mandatory overhead typically includes a preamble 115 (which may be used for frame synchronization, channel state estimation, received signal strength and Signal-To-Interference-Plus-Noise Ratio (SINR) estimation), as well as a Frame Control Header (FCH) message 120, a downlink map (DL-MAP) message 125, and an uplink map (UL-MAP) message 130. These messages describe the structure and composition of the frame. Time gaps, denoted as TTG (Transmit/Receive Transition Gap) and RTG (Receive/Transmit Transition Gap), may be inserted between the downlink and uplink subframes and at the end of each frame to allow time for transitions between transmission and reception functions. The frames are also divided into one or more resource allocation units (i.e., the resources allocated to one user or application) or bursts 135. In the case of OFDMA systems, the atomic unit that may be allocated for transmission is formed by aggregating a selected number of subchannels (or subcarrier sets, in broader terms, e.g. one subchannel in the IEEE 802.16e) in the frequency domain and a selected number of OFDMA symbols in the time domain (e.g., two symbols in the downlink and three symbols in the uplink in the case of IEEE 802.16e). Each burst typically includes at least a single atomic unit and therefore spans an integer number of symbols and a set of frequency subcarriers during each one of those symbols.

Uplink and/or downlink OFDMA subframes may be divided into permutation zones 140, 145 that may implement different subchannelization methods, different carrier frequency reuse factors and/or different subchannel segmentation or subchannel reuse factors, and/or advanced antenna techniques. For example, the first permutation zone 140 in the downlink subframe 105 shown in Figure 1 implements PUSC and the second permutation zone 145 in the downlink subframe 105 implements Band AMC. Since multiple permutation zones may be supported within each physical layer frame, resources may be efficiently shared among different users by taking into account mobile terminal capabilities and the channel conditions that they experience. For example, the PUSC subchannelization technique is typically more appropriate for rapidly moving users and the Band AMC technique is typically more appropriate for slowly moving or stationary users. Accordingly, if approximately 70% of the users in a wireless communication system are slow or stationary and approximately 30% are fast-moving, then approximately 30% of the downlink subframe may be allocated to a first permutation zone and approximately 70% of the downlink subframe may be allocated to a second permutation zone.

Base stations are typically required to assign resources *(i.e.,* bursts) to mobile units for scheduled operation on both the uplink and downlink. Resources may be allocated based on channel quality feedback from mobile stations. From a system throughput perspective, it is advantageous to schedule users experiencing good channel quality (*i.e*., peak picking). However, it is also desirable to ensure some degree of fairness by scheduling users that have not been allocated resources for a relatively long time compared to other users. Proportional Fair (PF) scheduling is an example of a channel-sensitive technique that has been widely used in 3G systems (*e*.*g*., cdma2000 High Rate Packet Data or HRPD) to achieve these objectives. In PF scheduling, base stations dynamically rank mobile users according to the ratio of their instantaneous data rate to their served rate at each scheduling instance and then allocates resources to the highest ranked users.

A single channel sensitive scheduler such as a Proportional Fair (PF) scheduler may be implemented in each sector by applying a homogenous pattern (*e.g*. the same subchannel reuse factor) to each OFDMA zone. This approach has several drawbacks from a system or user performance perspective since all users which experience a broad range of channel conditions compete for the same pool of resources purely based on a priority metric. For example, as users experiencing poor channel quality face "starvation," a fair and channel sensitive scheduler may grant resources to these "poor users" in preference to users experiencing good channel quality. Consequently, the conditions of users experiencing good or excellent channel conditions may not be fully exploited when all users are treated as part of the same pool. Hence, operating a system under such conditions will limit its achievable performance.
EP 1542 488 A1 discloses a method according to the preamble of claim 1.
"WiMAX -General information about the standard 802.16", Rohde & Schwarz, June 13, 2006, discloses a frame structure of the IEEE 802.16e standard which includes a number of permutation zones, each comprising a plurality of bursts.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

In one embodiment of the present invention, a method is provided for allocating portions of a frame to a plurality of mobile units including a plurality of frequency subcarrier sets and a plurality of symbols. The method includes determining at least one zone comprising at least one of the plurality of subcarrier sets and at least one of the plurality of symbols and determining a plurality of subzones. Each subzone includes at least one of the plurality of subcarrier sets and at least one of the plurality of symbols in the at least one zone. The method also includes associating each of the plurality of mobile units with at least one of the subzones and allocating a portion of the subcarrier sets and symbols in each subzone to the mobile units associated with each subzone. Allocating the frequency subcarrier sets and symbols in each subzone to the mobile units associated with each subzone comprises allocating the subcarrier sets and symbols by applying at least one scheduling algorithm to the mobile units associated with each subzone, wherein the mobile units are independently scheduled within each subzone.

### BRIEF DESCRIPTION OF THE DRAWINGS

The invention may be understood by reference to the following description taken in conjunction with the accompanying drawings, in which like reference numerals identify like elements, and in which:
Figure 1 conceptually illustrates one exemplary embodiment of a conventional frame structure implemented in the IEEE 802.16e standard;
Figure 2 conceptually illustrates one exemplary embodiment of a wireless communication system, in accordance with the present invention;
Figure 3 conceptually illustrates one exemplary embodiment of a method of allocating resources in a wireless communication system, in accordance with the present invention;
Figure 4 conceptually illustrates one exemplary embodiment of a frame structure, in accordance with the present invention;
Figure 5 illustrates an average sector throughput and system outage as functions of the subzone parameter, in accordance with the present invention;
Figure 6 illustrates a CDF of user throughput, in accordance with the present invention;
Figure 7 illustrates an average sector throughput and system outage as functions of the subzone parameter, in accordance with the present invention; and
Figure 8 illustrates a CDF of user throughput, in accordance with the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Portions of the present invention and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be radio propagation channels, twisted wire pairs, coaxial cable, optical fiber, or some other suitable transmission medium known to the art. The invention is not limited by these aspects of any given implementation.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, *i.e.,* a definition that is different from the ordinary and customary meaning as understood by those skilled in the art, is intended to be implied by consistent usage of the term or phrase herein. To the extent that a term or phrase is intended to have a special meaning, *i.e.,* a meaning other than that understood by skilled artisans, such a special definition will be expressly set forth in the specification in a definitional manner that directly and unequivocally provides the special definition for the term or phrase.

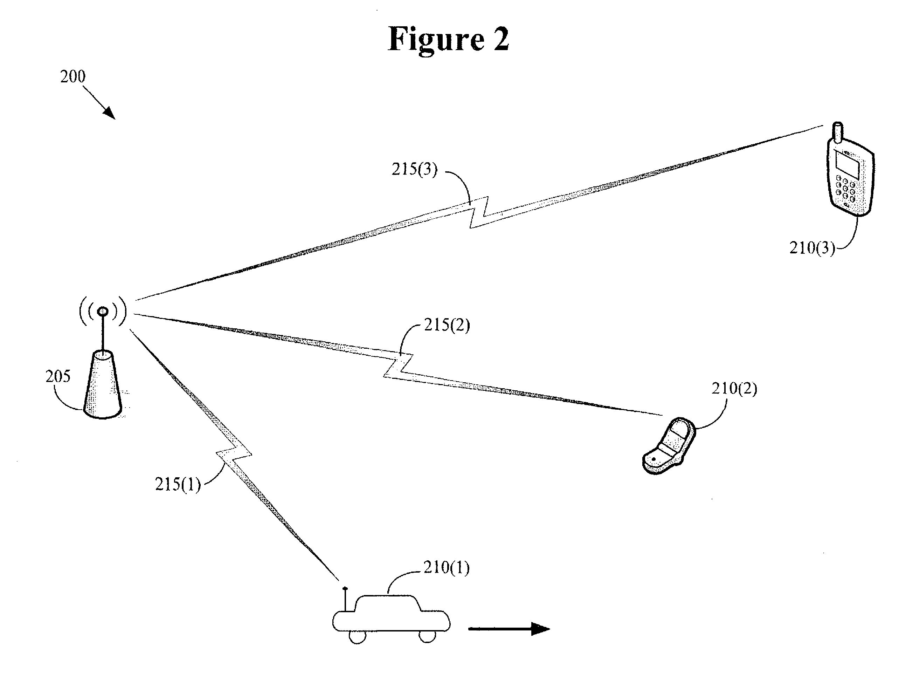

Figure 2 conceptually illustrates one exemplary embodiment of a wireless communication system 200. In the illustrated embodiment, the wireless communication system 200 includes a base station 205 that is configured to provide wireless connectivity within a geographic area, such as a cell. Although a single base station 205 is depicted in Figure 2, the present invention is not limited to any particular number of base stations 205. In alternative embodiments, more than one base station 205 may be used to provide wireless connectivity to one or more geographic areas. Furthermore, the present invention is not limited to base stations 205. In alternative embodiments, other entities such as wireless access points, wireless routers, base station routers, and the like may be used to provide wireless connectivity in the wireless communication system 200.

The base station 205 may provide wireless connectivity to mobile units 210(1-3) over air interfaces 215(1-3). The indices (1-3) may be used to indicate individual mobile units 210(1-3) and/or air interfaces 215(1-3), or subsets thereof. However the indices (1-3) may be dropped when referring to the mobile units 210 and/or air interfaces 215 collectively. This convention may also be used when referring to other elements shown in the drawings. In the illustrated embodiment, wireless connectivity is provided according to Orthogonal Frequency Division Multiple Access (OFDMA) standards and/or protocols. Accordingly, frames that are transmitted over the air interfaces 215 contain a plurality of subchannels (or subcarrier sets) and a plurality of symbols that may be partitioned into downlink and uplink subframes. However, the present invention is not limited to systems that operate according to the OFDMA standards and/or protocols. In alternative embodiments, the techniques described herein may be used in other systems that provide resources such as multiple subchannels (or subcarrier sets), multiple symbols/slots, and/or multiple codes for transmission over the air interfaces 215. Exemplary systems include, but are not limited to, systems that employ frequency-based multiple access (*i.e.*, based on Frequency Division Multiple Access (FDMA)), time-based multiple access (*i.e.*, based on Time Division Multiple Access (TDMA)), code-based multiple access (*i*.*e*., based on Code Division Multiple Access (CDMA)), and the like.

The base station 205 may measure one or more characteristics of the air interfaces 215. In one embodiment, the base station 205 may perform measurements using preamble and/or pilot signals transmitted to or received from the mobile units 210 to estimate channel conditions over the air interfaces 215 and/or velocities or Doppler factors of the mobile units 210. Each mobile unit 210 may then be assigned to one of the subzones. The measurements may indicate that a channel quality for the air interface 215(1) is relatively good and that the Doppler factor for the mobile unit 210(1) is relatively high because the mobile unit 210(1) is traveling at a relatively high velocity. The measurements may also indicate that a channel quality for the air interface 215(2) is relatively good and that the Doppler factor for the mobile unit 210(2) is relatively low because the mobile unit 210(2) is stationary or traveling at a relatively low velocity (e.g., walking speed). The measurements may further indicate that a channel quality for the air interface 215(3) is relatively poor (*e.g*., because the mobile unit 210(3) is distant from the base station 205) and that the Doppler factor for the mobile unit 210(3) is relatively high because the mobile unit 210(3) is traveling at a relatively high velocity. The measurements may be performed at any permitted time.

The measurements of the characteristics of the air interfaces 215 may then be used to determine system parameters such as traffic loads, a fraction of the mobile units 210 that are experiencing certain radio channel conditions, a fraction of the mobile units 210 that have low and/or high Doppler factors, and the like. For example, the measurements may indicate that a channel quality for 2/3 of the mobile units 210 is relatively good and that the Doppler factor for 1/3 of the mobile units 210 is relatively high. Alternatively, one or more system parameters may be directly determined by the base station 205. The measurements of the air interface characteristics and/or determination of the system parameters may be performed at any permitted time.

The base station 205 may partition the uplink and/or downlink OFDMA frames into permutation zones based on the measured parameters of the wireless communication system 200. In one embodiment, the base station 205 may partition OFDMA downlink and/or uplink subframes into one or more homogeneous zones (*e*.*g*., same type of subchannelization method and/or same subchannel/carrier frequency reuse factor) or heterogeneous zones (*e*.*g*., zones implementing different types of subchannelization such as PUSC, Band AMC, AAS, and/or different subchannel/carrier frequency reuse factor). For example, the base station 205 may partition a downlink subframe into a first permutation zone that implements PUSC and a second permutation zone that implements Band AMC. The partitioning may reflect measurements of physical parameters such as channel conditions and/or Doppler factors. For example, if approximately 70% of the mobile units 210 in a wireless communication system are slow or stationary and approximately 30% of the mobile units 210 are fast-moving, then approximately 30% of the downlink subframe may be allocated to a first permutation zone and approximately 70% of the downlink subframe may be allocated to a second permutation zone.

Each of the permutation zones may then be subdivided into a plurality of subzones. The resources allocated to each subzone may be referred to as bursts. A burst is formed by reserving a collection of subcarriers or subchannels in the frequency domain and a collection of OFDMA symbols in the time domain according to the transmission needs of the supported applications in the base station 205 and/or the mobile units 210. In one embodiment, the base station 205 determines a number of subzones for each permutation zone and the allocation of resources (*e.g*., numbers of subchannels, symbols, OFDMA slots) to the subzones based upon measurements of system parameters. For example, mobile units 210 having relatively good channel conditions may be assigned to one subzone and those having relatively poor channel conditions may be assigned to a different subzone. For another example, mobile units 210 experiencing fast varying channel conditions can be served via a subzone scheduling mechanism within a PUSC zone while users subject to slow varying channel conditions can be accommodated via a subzone scheduling mechanism within a Band AMC zone to further enhance the overall system performance.

The subzone boundaries may be fixed or may vary over time. For example, the subzone boundaries may be determined statically or quasi-statically as a function of static or relatively slowly varying parameters such as average traffic loads, the average number of active users eligible in each subzone or scheduler category, and the like. For these parameters, the averaging process is typically executed over a relatively long time window of interest (*e*.*g*. over the Busy Hour (BH)). Events which could result in eventual changes in subzone boundaries (*e*.*g*. significant shifts in traffic loads per subzone) may therefore result in the quasi-static partitioning of zones, which occurs over rather large or very large time scales (hours/days). The subzones may also be determined dynamically, *e*.*g*., on a frame-by-frame basis. Dynamic partitioning of the permutation zones into subzones may be performed when one or more system parameters are varying relatively rapidly. In the case of dynamic zone partitioning, the size of each subzone may be adjusted dynamically according to one or more system parameters such as measured loads per traffic category or the relative fractions of active users in each subzone (scheduler category).

Each of the mobile units 210 may then be assigned to at least one of the subzones. For example, if a first subzone is defined for mobile units 210 having relatively good channel conditions and a second subzone is defined for mobile units having relatively poor channel conditions, then the mobile units 210(1-2) may be assigned to the first subzone and a mobile unit 210(3) may be assigned to the second subzone. In various alternative embodiments, the eligibility of mobile unit 210 for resource allocation within each subzone may be determined with preferred levels of granularity. For example, the finest level of granularity may be on a frame-by-frame basis and a coarse level of granularity may allow eligibility of the mobile units 210 to be determined on a much larger time scale, such as on an hourly or daily basis. The granularity of the resource allocation process may be based on fluctuating radio channel conditions, thus providing the flexibility to dynamically create a pool of eligible mobile units 210 for each subzone.

Each subzone may be designed to achieve a desired system/user metric objective. For instance a first set of resource allocation mechanisms may be used within a first subzone of a OFDMA zone to enhance a first quality objective (e.g. maximize the sector throughput), while a second set of resource allocation mechanisms may be used within a second subzone of the same OFDMA zone to enhance a second quality objective (e.g. maximize individual user throughputs and minimize the system outage). The ratio of resources assigned to each subzone may be determined in accordance to the desired tradeoff between the various performance metrics of interest (e.g. sector throughput versus system outage). In one embodiment, scheduler thresholds may be employed within at least one of the subzones to prevent the admission of mobile units 210 experiencing radio link quality under an acceptable quality threshold as a mechanism of per subzone resource allocation to enhance key system indicators such as sector throughputs.

In another embodiment, the use of scheduler thresholds may be combined with mechanisms that allow scheduling of users experiencing the best-in-class radio channel conditions to enhance key system indicators (*e*.*g*., to maximize system utilization and enhance the sector throughput). For example, if a subzone dedicated to mobile units 210 having good channel qualities has no assigned mobile units, *e*.*g*., if reported channel quality metrics from all mobiles are under the scheduler threshold(s), then the mobile units 210 that currently have the best channel qualities may be assigned to the subzone. In yet another embodiment, scheduler thresholds may not be employed within at least one of the subzones to allow scheduling opportunities for users with less favorable radio channel conditions in order to enhance other key system indicators such as the system outage.

Once the different sets of mobile units 210 are assigned to each subzone for a resource allocation cycle, the mobile units 210 are independently scheduled within each subzone, *e*.*g*., according to their prevailing channel quality. Thus, at any given scheduling instant (*i*.*e*., during a downlink/uplink subframe), contention among mobile units 210 assigned to a given subzone is limited to the resources allocated to the subzone. The present invention is not limited to a particular scheduling algorithm and, in alternative embodiments, algorithms such as "peak pick" and "proportional fair" may be used to schedule the mobile units 210 assigned to each subzone. Furthermore, different scheduling algorithms may be used to schedule mobile units 210 assigned to different subzones. In one embodiment, per-user performance metrics relevant to the scheduling process may be tracked on a subzone basis only so that when mobile units 210 move from one subzone to another, they start with a fresh history in the new zone. In another embodiment, scheduling metrics may be tracked across subzones, so that when mobile units 210 move across subzones their serving history may be taken into account.

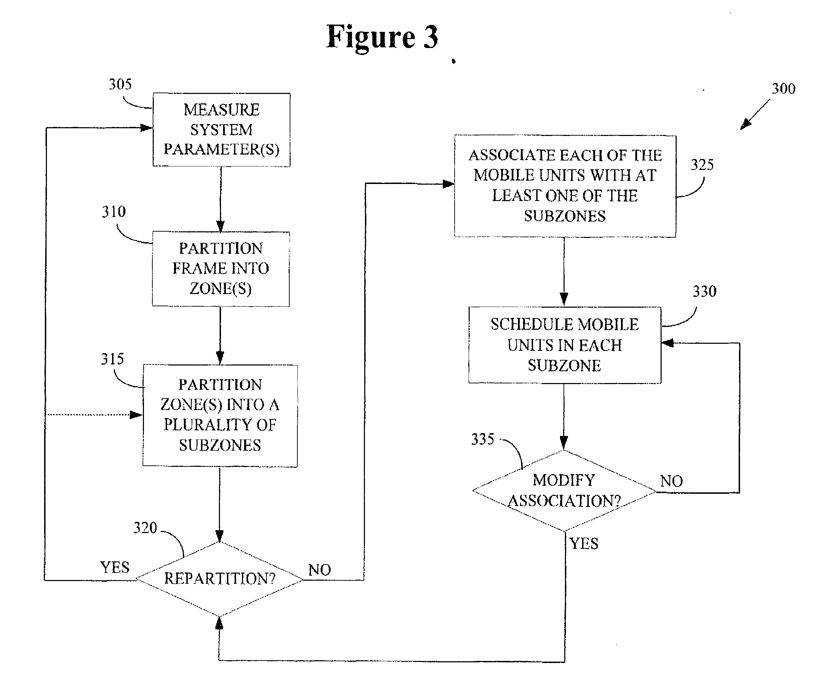

Figure 3 conceptually illustrates one exemplary embodiment of a method 300 of allocating resources in a wireless communication system, such as the wireless communication system 200 shown in Figure 2. In the illustrated embodiment, system parameters, such as traffic loads, fractions of users experiencing certain channel conditions, and the like are measured (at 305). One or more frames or subframes are then partitioned (at 310) into one or more zones. As discussed above, each of the zones may implement the same or different subchannelization, subchannel reuse, carrier frequency reuse, antenna operation techniques, and the like. The partitioning (at 310) may be performed based on the measurements of system parameters and may be performed at any permitted interval or in response to events such as variations in measured system parameters. The zones may then be partitioned (at 315) into subzones, as discussed in detail above. Although all of the zones may be partitioned (at 315) into subzones, the present invention is not limited to embodiments in which all the zones are partitioned (at 315). In some embodiments, fewer than all the zones may be partitioned (at 315) into subzones. Partitioning (at 315) of the zones into subzones may be performed statically, quasi-statically, and/or dynamically.

In the illustrated embodiment, the wireless communication system determines (at 320) whether or not to re-partition one or more frames or subframes. For example, a wireless communication system may determine (at 320) whether to re-partition frames or subframes based on a predetermined time interval, a time interval that is determined based upon the measurements (at 305) of the system parameters, or based on some other criterion. In one embodiment, if the wireless communication system determines (at 320) to re-partition one or more frames or subframes, the system parameters may be measured (at 305) and this information may be used to partition (at 310 and/or 315) the frames or subframes into zones and/or subzones. However, in alternative embodiments or in other iterations of the method 300, it may not be necessary or desirable to measure (at 305) the system parameters and re-partition (at 310) the frame into zones. In these cases, the wireless communication system may only elect to repartition (at 315, as indicated by the dashed arrow) the current zones into a plurality of subzones, *e*.*g*., by modifying the boundaries of the subzones. For example, the wireless communication system may repartition (at 310) the zones on a relatively long timescale while repartitioning (at 315) the sub zones on a relatively short time scale.

If the wireless communication system determines (at 320) that it is not necessary to re-partition one or more frames or subframes, then mobile units may be associated (at 325) with one or more subzones. Each mobile unit may be associated (at 325) with at least one of the subzones. For example, a first pool comprising mobile units satisfying a first criterion, for instance those mobile units experiencing good radio channel conditions may be associated (at 325) with a first subzone and a second pool of mobile units satisfying a second criterion may be associated (at 325) with a second subzone. In one embodiment, the second pool of mobile units may include all of the mobile units that were not assigned (at 325) to the first pool of mobile units. In another embodiment, for instance, all the mobile units may be assigned to the second pool of resources. The mobile units in the subzones may then be scheduled (at 330) independent of mobile units in other subzones. In one embodiment, the same channel sensitive scheduler (e.g. PF) may be assumed in different subzones. However, for mobile units that are eligible for multiple subzones, certain scheduler metrics, such as the throughput history with PF scheduling, may be independently tracked for each subzone. Using IEEE 802.16e terminology, the subzone scheduling mechanism may be implemented for instance with a single zone or within multiple IEEE 802.16e zones where the same or different subchannel reuse factors or carrier frequency reuse factors (*e*.*g*., 1/1 and 1/3) are employed and different subchannelization methods are potentially used as applicable.

In the illustrated embodiment, a wireless communication system may determine (at 335) whether to modify the association of mobile units with subzones. For example, the wireless communication system may determine (at 335) whether to modify (at 325) the association of mobile units with subzones following a scheduling cycle. The determination (at 335) may be made on a frame-by-frame basis or over longer time scales. If the wireless communication system determines (at 335) that the association of the mobile units with subzones should be modified (at 325), then the wireless communication system may also determine (at 320) whether to re-partition (at 310 and/or 315) the frames, subframes, and/or zones prior to modifying the association of the mobile units with the subzones. However, persons of ordinary skill in the art having benefit of the present disclosure should appreciate that the step of determining (at 320) whether to re-partition the frames or subframes prior to modifying (at 325) the association of the mobile units with the sub zones is optional. Furthermore, as discussed above, the subzones may be repartitioned (at 315) without necessarily measuring (at 305) system parameters and repartitioning (at 310) the zones. If the wireless communication system determines (at 335) that it is not necessary to modify (at 325) the association of the mobile units with a subzones, then the mobile units may continue to be scheduled (at 330) to the sub zones.

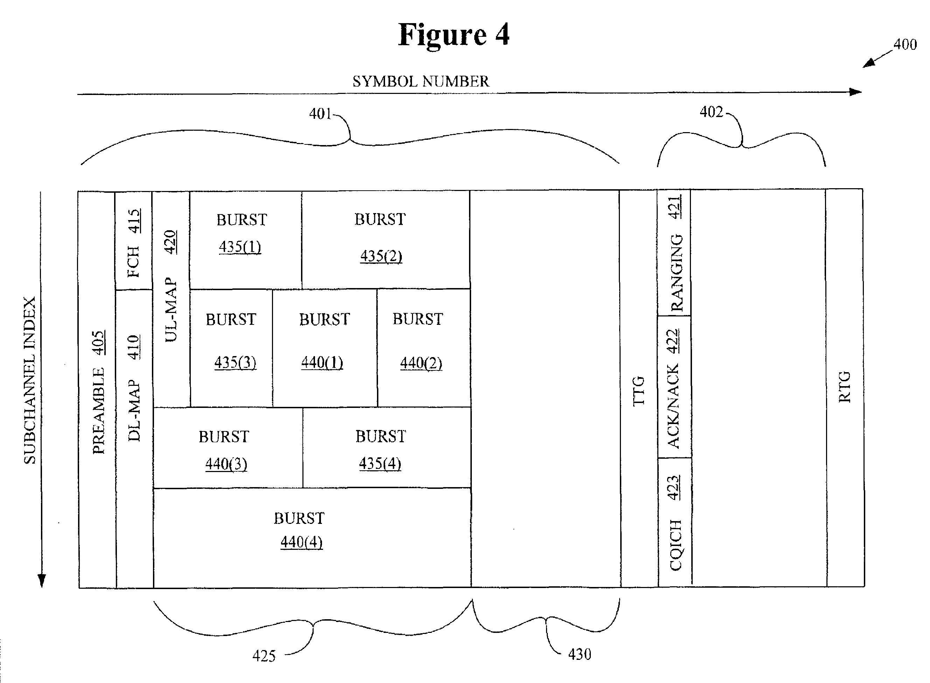

Figure 4 conceptually illustrates one exemplary embodiment of a frame structure 400. In the illustrated embodiment, the frame structure 400 corresponds to an IEEE 802.16e downlink subframe supporting one embodiment of the subzone scheduling algorithm described herein. The symbol number is indicated along the horizontal axis and increases to the right, representing the evolution with time, and the subchannel index is indicated along the vertical axis and increases from top to bottom, representing the logical numbering of subchannels in the frequency domain. The frame structure 400 includes a downlink subframe 401 and an uplink subframe 402 separated by guard bands TTG and RTG. One or more initial symbols and subchannels of the downlink subframe 401 are allocated to a preamble 405, a DL-MAP 410, an FCH 415, and a UL-MAP 420. Similarly, a number of OFDMA resources (symbols and subchannels) pertaining to the uplink subframe are dedicated for control information in the uplink to support procedures such as ranging 421, message acknowledgment (Acknowledgement (ACK) channel) 422, and fast feedback (Channel Quality Indicator Channel (CQICH)) 423. The downlink subframe 401 has also been partitioned into a first zone 425 and a second zone 430. For example, the first zone 425 may use PUSC subchannelization and the second zone 430 may use Band AMC subchannelization. Note that the use of two zones per subframe in this illustration is for simplicity reasons; alternatively, the subframe may just use a single zone or may be split into more than two zones, in accordance to the step 305 in Figure 3.

In accordance with one embodiment of the present invention, the first zone 425 is partitioned into multiple subzones (two subzones in this example) that include one or more bursts 435, 440. As shown in Figure 4, bursts 435, 440 within a subzone are not required to be contiguous in time or frequency dimensions. Furthermore, burst numbering is notional and does not carry any physical mapping significance. In one embodiment, 1/1 subchannel reuse may be applied to both subzones 435, 440. However, persons of ordinary skill in the art having benefit of the present disclosure should appreciate that the present invention is not limited to applying 1/1 subchannel reuse to both subzones 435, 440. In alternative embodiments, different subchannel reuse or carrier frequency reuse may be applied to the two subzones 435, 440. For example, 1/3 subchannel reuse may be applied to one of the subzones 435, 440. Furthermore, each subzone 435, 440 has a number of resources (subchannels and symbols) assigned to it and in one embodiment the first subzone 435 is used to schedule mobile units experiencing good link quality while the second subzone 440 is used for scheduling all other users.

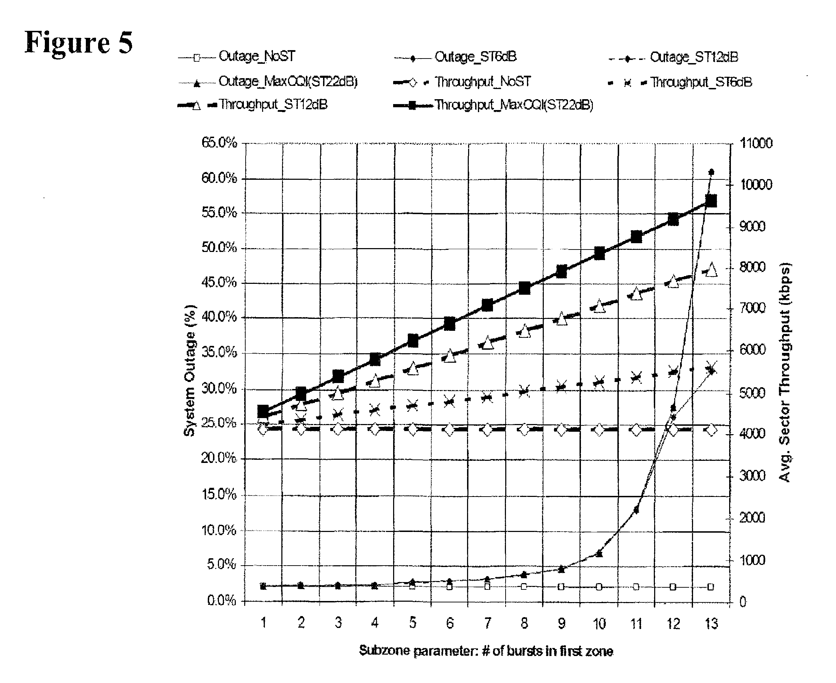

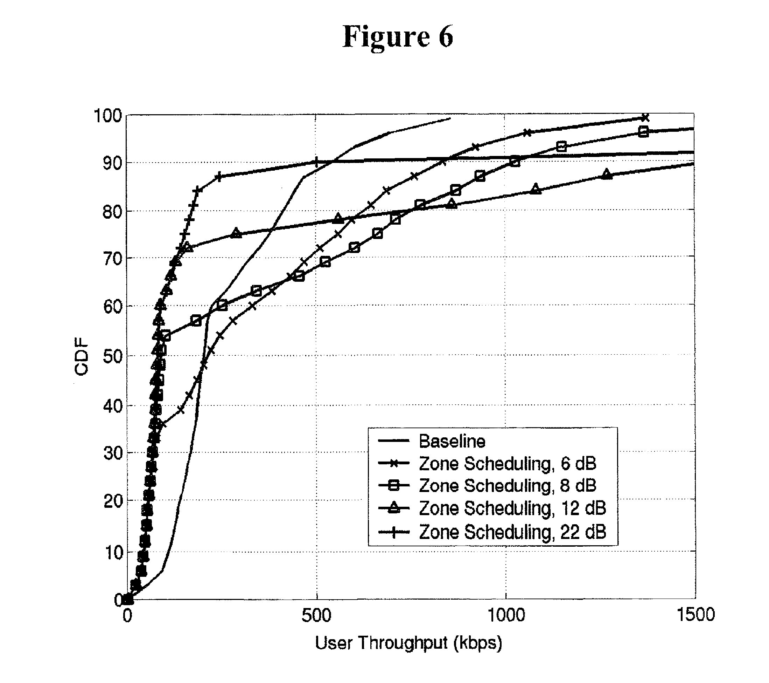

Figure 5 illustrates the average sector throughput and system outage as functions of the subzone parameter. Figure 6 illustrates the CDF of user throughput for the same embodiment. In the embodiment shown in Figures 5 and 6, the permutation zone implements PUSC, ITU Vehicular A at 30Km/hr, and one embodiment of the subzone scheduling mechanism described herein. Figures 5 and 6 capture results obtained from an implementation of the subzone scheduling mechanism which assumes a single PUSC zone divided into two separate subzones, both employing 1/1 subchannel reuse. All users operate under ITU Vehicular A channel conditions at 30 Km/hr for our PUSC scenario.. Note that 15 bursts are available in total for the downlink subframe with 1/1 subchannel reuse in this example. As a result, the subzone size parameter, i.e., the number of bursts assigned to the first subzone, can assume any integer value between 0 and 15.

Performance of the subzone scheduling mechanism may be compared against the baseline system that places all users in the same pool and operates with a single instance of a PF scheduler. Figure 5 illustrates the sector throughput and system outage metrics as functions of the subzone size. To better understand the behavior of the proposed subzone scheduling mechanism, four separate cases corresponding to four different scheduling conditions for the first subzone were considered, namely when no scheduling threshold was applied (NoST), and when 6dB (ST6dB), 12dB (ST12dB) and 22dB (ST22dB) were used as scheduling threshold values. The NoST case is in fact equivalent to the baseline case (no subzone). The maximum sector throughput value was obtained with a threshold greater or equal than 22dB with this implementation; due to the two-step scheduling process employed within the first subzone, which prevents resource idling, this essentially corresponds to the case where the user with the highest reported CQI value is scheduled (labeled as "MaxCQI" in the graph) in the first subzone. The two-step scheduling process within the first subzone consists in identifying a first set of mobiles units in the first step, assigning them to the subzone, and considering them for scheduling if they have reported channel quality indicator(s) better than the scheduler threshold, 22dB; if the set of mobile units is empty after the first step, a set of users eligible for scheduling is created in the second step by assigning to the subzone at least the mobile unit reporting the best-in-class channel quality at any scheduling opportunity. According to one of the embodiments of the invention, all the users were eligible for scheduling within the second subzone in order to allow to schedule users with less favorable radio conditions as well, and thus to reduce the system outage without impacting users experiencing very good channel conditions which may be eligible for scheduling within the first subzone.

The results shown in Figures 5 and 6 indicate that the subzone scheduling mechanism achieves a better tradeoff between sector throughput and system outage compared to the baseline resource allocation mechanisms (no subzones, with and without scheduling threshold). In particular, one should note that regardless of the actual scheduler threshold value that is used by the first subzone, the system outage is maintained at a fairly low value (e.g. under 5%) in the operating area of interest (up to 9 bursts reserved for the first subzone in the case of PUSC). If the objective function is to maximize the sector throughput, one may choose to operate with a subzone.partition that maintains a system outage close to 5% for instance and determine the parameters settings (e.g. subzone parameter and scheduling threshold) for the subzone scheduling mechanism that achieves the highest sector throughput in that case. For these conditions, results displayed in Figure 5 indicate approximately 85% sector throughput improvement over the baseline. Note that the solution that maximizes sector throughput may not yield a desirable user throughput distribution and as a result, combinations that support better user distributions and/or lower system outage albeit with somewhat lower sector throughput may be selected. Figure 6 presents the CDF of user throughputs generated with subzone scheduling for operating points corresponding to a 4.8% system outage in all cases employing scheduler thresholds. Considering Figures 5 and 6 together illustrates how the subzone scheduling algorithm provides a range of tradeoff options between system capacity and user experience.

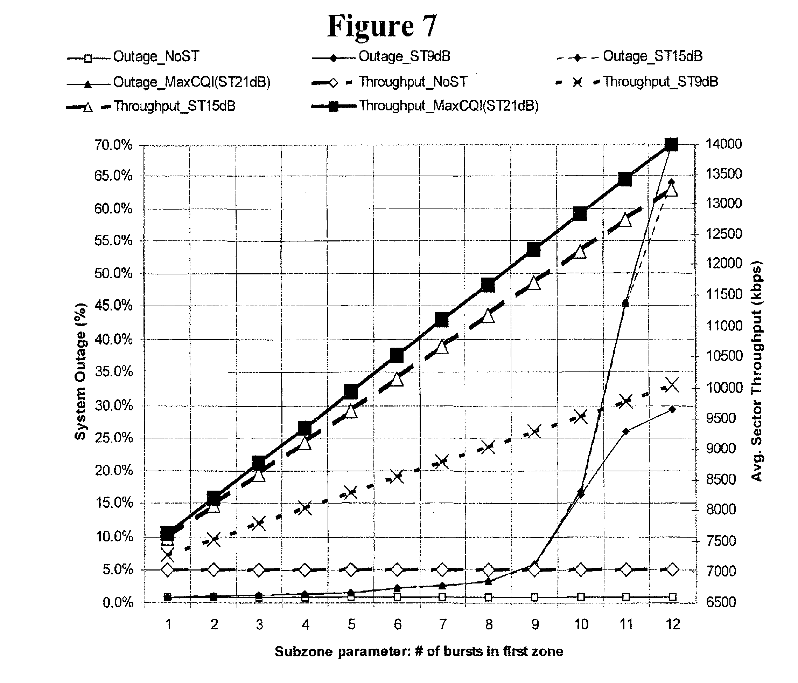

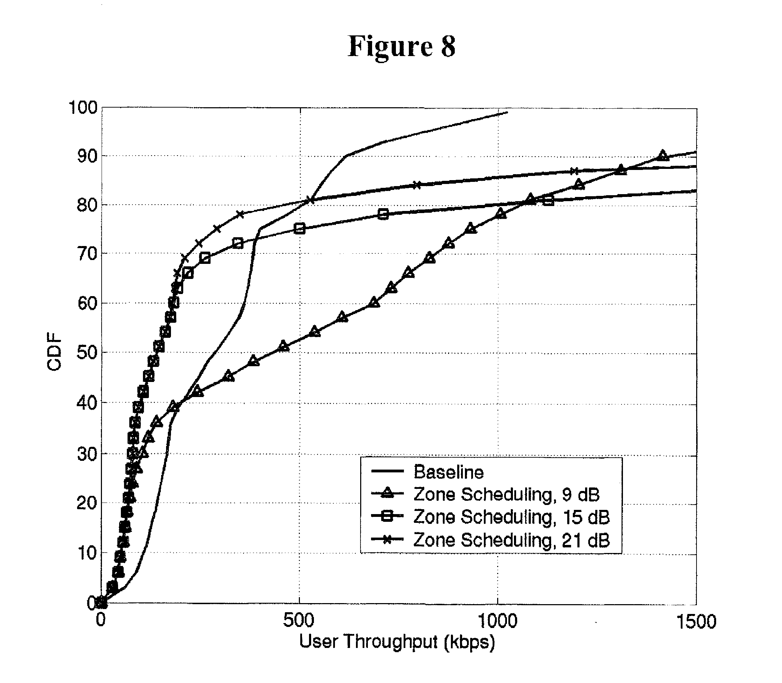

Figure 7 illustrates the average sector throughput and system outage as functions of the subzone parameter. Figure 8 illustrates the CDF of user throughput for the same embodiment. In the embodiments shown in Figures 7 and 8, the permutation zone implements Band AMC, ITU Pedestrian B at 3Km/hr, and one embodiment of the subzone scheduling mechanism described herein. Figures 7 and 8 illustrate the performance of the subzone scheduling algorithm with Band AMC assuming the ITU Pedestrian B, 3 Km/hr channel model. As shown in Figure 7, the subzone scheduling algorithm again offers significant sector throughput gains (e.g. 75% improvement at around 5% system outage) over the baseline Band AMC subchannelization scenario.

The subzone scheduling approach described herein is widely applicable to OFDMA systems in addition to IEEE 802.16e. It provides controls that may be easily and efficiently employed in conjunction with fair channel sensitive schedulers in particular, to achieve a more efficient operating point for the system in terms of sector throughput while achieving the desired user throughput behavior and system outage

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

## Claims

1. A method of allocating portions of a frame (400) to a plurality of mobile units (210(1-3)) comprising a plurality of frequency subcarrier sets and a plurality of symbols, comprising:
determining at least one zone (425, 430) comprising at least one of the plurality of subcarrier sets and at least one of the plurality of symbols;
determining a plurality of subzones (435, 440), each subzone (435, 440) comprising at least one of the plurality of subcarrier sets and at least one of the plurality of symbols in said at least one zone (425, 430);
associating each of the plurality of mobile units (210(1-3)) with at least one of the subzones (435,440); and
allocating a portion of the subcarrier sets and symbols in each subzone (435, 440) to the mobile units (210(1-3)) associated with each subzone (435, 440),
**characterized in that**
allocating the frequency subcarrier sets and symbols in each subzone (435, 440) to the mobile units (210(1-3)) associated with each subzone (435, 440) comprises allocating the subcarrier sets and symbols by applying at least one scheduling algorithm to the mobile units (210(1-3)) associated with each subzone (435, 440), wherein the mobile units (210(1-3)) are independently scheduled within each subzone (435, 440).

2. The method of claim 1, wherein determining said at least one zone (425, 430) comprises determining said at least one zone (425, 430) based upon measurements of at least one of traffic load metric, a percentage of mobile units associated with a channel quality, and a percentage of mobile units associated with a Doppler factor.

3. The method of claim 1, wherein determining said at least one zone (425, 430) comprises partitioning at least one of a downlink subframe (401) and an uplink subframe (402) into at least one zone (425, 430) associated with a subchannelization technique, a frequency reuse factor, a subchannel reuse factor, and an antenna operation technique.

4. The method of claim 1, wherein determining the plurality of subzones (435, 440) comprises:
determining a number of subzones (435, 440)within each zone (425, 430); and
determining a number of subchannels and symbols for each subzone (435, 440).

5. The method of claim 1, wherein determining the plurality of subzones (435, 440) comprises determining the plurality of subzones (435, 440) based upon at least one measured system parameter.

6. The method of claim 5, wherein determining the plurality of subzones (435, 440) based upon said at least one measured system parameter comprises determining the plurality of subzones (435, 440) based upon measurements of at least one of a traffic load metric, an average traffic load, a measured metric for the number of mobiles associated with each subzone (435, 440), an average number of mobile units per subzone (435, 440), a measured load per traffic category, and a relative fraction of mobile units associated with each subzone (435, 440).

7. The method of claim 5, wherein determining the plurality of subzones (435, 440) comprises determining the plurality of subzones (435,440) statically, quasi-statically, or dynamically.

8. The method of claim 1, wherein determining the plurality of subzones (435, 440) comprises determining the plurality of subzones (435, 440) based upon at least one of a system or a user metric objective.

9. The method of claim 1, wherein associating each of the plurality of mobile units (210(1-3)) with at least one of the subzones (435, 440) comprises associating each of the plurality of mobile units (210(1-3)) with at least one of the subzones (435, 440) based on measurements of at least one of a Doppler factor associated with the mobile unit (210(1-3)), a channel quality associated with the mobile unit (210(1-3)), and a scheduler threshold value.

## Patentansprüche

1. Verfahren für die Zuordnung von Rahmenteilen (400) zu einer Vielzahl an mobilen Einheiten (210(1-3)), bestehend aus einer Vielzahl an Einstellungen der Frequenzzwischenträger und einer Vielzahl an Symbolen, umfassend:
Festlegen mindestens eines Bereichs (425, 430), der mindestens eine der Vielzahl an Zwischenträgereinstellungen und mindestens eines der Vielzahl an Symbolen umfasst;
Festlegen einer Vielzahl an Teilbereichen (435, 440), wobei jeder Teilbereich (435, 440) mindestens eine der Vielzahl an Zwischenträgereinstellungen und mindestens eines der Vielzahl an Symbolen in dem besagten mindestens einen Bereich (425, 430) umfasst;
Verbindung einer jeden der Vielzahl an mobilen Einheiten (210(1-3)) mit mindestens einem der Teilbereiche (435, 440); und
Zuordnung eines Teils der Zwischenträgereinstellungen und Symbole in jedem Teilbereich (435, 440) zu den mobilen Einheiten (210(1-3)), die mit jedem Teilbereich verbunden sind (435, 440),
**dadurch gekennzeichnet, dass**
die Zuteilung der Einstellungen der Frequenzzwischenträger und Symbole in jedem Teilbereich (435, 440) zu den mobilen Einheiten (210(1-3)), die mit jedem Teilbereich (435, 440) verbunden sind, eine Zuordnung der Zwischenträgereinstellungen und Symbole umfasst, indem mindestens ein Planungsalgorithmus auf die mobilen Einheiten (210(1-3)), die mit jedem Teilbereich (435, 440) verbunden sind, angewandt wird, wobei die mobilen Einheiten (210(1-3)) unabhängig innerhalb jedes Teilbereichs (435, 440) festgelegt werden.

2. Verfahren nach Anspruch 1, wobei das Festlegen des besagten mindestens einen Bereichs (425, 430) das Festlegen des besagten mindestens einen Bereichs (425, 430) umfasst, basierend auf Messungen von mindestens entweder Verkehrsbelastungsmetriken, einem Prozentsatz an mobilen Einheiten, verbunden mit einer Kanalqualität oder einem Prozentsatz an mobilen Einheiten, verbunden mit einem Dopplerfaktor.

3. Verfahren nach Anspruch 1, wobei das Festlegen des besagten mindestens einen Bereichs (425, 430) die Aufteilung von mindestens entweder eines Downlink-Subrahmens (401) oder eines Uplink-Subrahmens (402) in mindestens einem Bereich (425, 430), verbunden mit einer Subkanalisierungstechnik, einem Frequenz-Wiederverwendungsfaktor, einem Teilkanal-Wiederverwendungsfaktor und einer Antennenbetriebstechnik, umfasst.

4. Verfahren nach Anspruch 1, wobei das Festlegen der Vielzahl an Teilbereichen (435, 440) umfasst:
Festlegen einer Anzahl an Teilbereichen (435, 440) innerhalb jedes Bereichs (425, 430); und
Festlegen einer Anzahl an Teilkanälen und Symbolen für jeden Teilbereich (435, 440).

5. Verfahren nach Anspruch 1, wobei das Festlegen der Vielzahl an Teilbereichen (435, 440) das Festlegen der Vielzahl an Teilbereichen (435, 440), basierend auf mindestens einem gemessenen Systemparameter, umfasst.

6. Verfahren nach Anspruch 5, wobei das Festlegen der Vielzahl an Teilbereichen (435, 440), basierend auf dem besagten mindestens einen gemessenen Systemparameter, das Festlegen der Vielzahl an Teilbereichen (435, 440) umfasst, basierend auf den Messungen mindestens entweder einer Verkehrsbelastungsmetrik, einer durchschnittlichen Verkehrsbelastung, einer gemessenen Metrik für die Anzahl an Mobilgeräten, verbunden mit jedem Teilbereich (435, 440), einer durchschnittlichen Anzahl an mobilen Einheiten pro Teilbereich (435, 440), einer gemessenen Belastung pro Verkehrskategorie oder eines relativen Anteils an mobilen Einheiten, verbunden mit jedem Teilbereich (435, 440).

7. Verfahren nach Anspruch 5, wobei das Festlegen der Vielzahl an Teilbereichen (435, 440) das statische, quasistatische und dynamische Festlegen der Vielzahl an Teilbereichen (435, 440) umfasst.

8. Verfahren nach Anspruch 1, wobei das Festlegen der Vielzahl an Teilbereichen (435, 440) das Festlegen der Vielzahl an Teilbereichen (435, 440), basierend auf mindestens entweder einem System oder einem Ziel der Nutzermetrik, umfasst.

9. Verfahren nach Anspruch 1, wobei die Verbindung einer jeden der Vielzahl an mobilen Einheiten (210(1-3)) mit mindestens einem der Teilbereiche (435, 440) die Verbindung einer jeden der Vielzahl an mobilen Einheiten (210(1-3)) mit mindestens einem der Teilbereiche (435, 440) umfasst, basierend auf den Messungen von mindestens entweder einem Dopplerfaktor, verbunden mit der mobilen Einheit (210(1-3)), einer Kanalqualität, verbunden mit der mobilen Einheit (210(1-3)) oder einem Planungsschwellenwert.

## Revendications

1. Procédé d'attribution de parties d'une trame (400) à une pluralité d'unités mobiles (210(1-3)) comprenant une pluralité d'ensembles de sous-porteuses de fréquence et une pluralité de symboles, comprenant les étapes suivantes :
déterminer au moins une zone (425, 430) comprenant au moins un parmi la pluralité d'ensembles de sous-porteuses et au moins un parmi la pluralité de symboles ;
déterminer une pluralité de sous-zones (435, 440), chaque sous-zone (435, 440) comprenant au moins un parmi la pluralité d'ensembles de sous-porteuses et au moins un parmi la pluralité de symboles dans ladite au moins une zone (425, 430) ;
associer chacun parmi la pluralité d'unités mobiles (210(1-3)) à au moins une des sous-zones (435, 440) ; et
attribuer une partie des ensembles de sous-porteuses et des symboles dans chaque sous-zone (435, 440) aux unités mobiles (210(1-3)) associées à chaque sous-zone (435, 440),
**caractérisé en ce que**
l'attribution des ensembles de sous-porteuses de fréquence et des symboles dans chaque sous-zone (435, 440) aux unités mobiles (210(1-3)) associées à chaque sous-zone (435, 440) comprend l'attribution des ensembles de sous-porteuses et des symboles en appliquant au moins un algorithme d'ordonnancement aux unités mobiles (210(1-3)) associées à chaque sous-zone (435, 440), dans lequel les unités mobiles (210(1-3)) sont ordonnancées indépendamment dans chaque sous-zone (435,440).

2. Procédé selon la revendication 1, dans lequel la détermination de ladite au moins une zone (425, 430) comprend la détermination de ladite au moins une zone (425, 430) sur la base de mesures d'au moins un élément parmi une mesure de charge de trafic, un pourcentage d'unités mobiles associées à une qualité de canal, et un pourcentage d'unités mobiles associées à un facteur Doppler.

3. Procédé selon la revendication 1, dans lequel la détermination de ladite au moins une zone (425, 430) comprend la partition d'au moins une sous-trame parmi une sous-trame de liaison descendante (401) et une sous-trame de liaison montante (402) en au moins une zone (425, 430) associée à une technique de découpage en sous-canaux, un facteur de réutilisation de fréquences, un facteur de réutilisation de sous-canal, et une technique de fonctionnement d'antenne.

4. Procédé selon la revendication 1, dans lequel la détermination de la pluralité de sous-zones (435, 440) comprend les étapes suivantes :
déterminer un nombre de sous-zones (435, 440) dans chaque zone (425, 430) ; et
déterminer un nombre de sous-canaux et de symboles pour chaque sous-zone (435, 440).

5. Procédé selon la revendication 1, dans lequel la détermination de la pluralité de sous-zones (435, 440) comprend la détermination de la pluralité de sous-zones (435, 440) sur la base d'au moins un paramètre de système mesuré.

6. Procédé selon la revendication 5, dans lequel la détermination de la pluralité de sous-zones (435, 440) sur la base dudit au moins un paramètre de système mesuré comprend la détermination de la pluralité de sous-zones (435, 440) sur la base de mesures d'au moins un élément parmi une mesure de charge de trafic, une charge de trafic moyenne, une mesure mesurée pour le nombre d'unités mobiles associées à chaque sous-zone (435, 440), un nombre moyen d'unités mobiles par sous-zone (435, 440), une charge mesurée par catégorie de trafic et une fraction relative d'unités mobiles associées à chaque sous-zone (435, 440).

7. Procédé selon la revendication 5, dans lequel la détermination de la pluralité de sous-zones (435, 440) comprend la détermination de la pluralité de sous-zones (435, 440) de manière statique, de manière quasi statique ou de manière dynamique.

8. Procédé selon la revendication 1, dans lequel la détermination de la pluralité de sous-zones (435, 440) comprend la détermination de la pluralité de sous-zones (435, 440) sur la base d'un objectif de mesure de système et/ou d'utilisateur.

9. Procédé selon la revendication 1, dans lequel l'association de chacune parmi la pluralité d'unités mobiles (210(1-3)) avec au moins une des sous-zones (435, 440) comprend l'association de chacune parmi la pluralité d'unités mobiles (210(1-3)) avec au moins une des sous-zones (435, 440) sur la base de mesures d'au moins un des éléments parmi un facteur Doppler associé à l'unité mobile (210(1-3)), une qualité de canal associée à l'unité mobile (210(1-3)) et une valeur de seuil d'ordonnanceur.
